# DEMANDE DE BREVET EUROPEEN

(11) **EP 4 242 901 A1**
(43) Date de publication de la demande: **13.09.2023**
(21) Numéro de dépôt: 23157786.7
(22) Date de dépôt: 21.02.2023
(51) Int. Cl.: G06F 21/79, G06F 21/72, G11C 16/22, G11C 7/24, G11C 29/08

(54) **PROTECTION D'UN CIRCUIT INTEGRE**

(30) Priorité: 07.03.2022 FR 2201938
(71) Demandeur: STMicroelectronics (Rousset) SAS, 13790 Rousset (FR); STMicroelectronics International N.V., 1228 Plan-les-Ouates, Geneva (CH)
(72) Inventeur: LA ROSA, Francesco, 13790 ROUSSET (FR); BILDGEN, Marco, 74420 HABERE-POCHE (FR)
(74) Mandataire: Casalonga

(57) **Abrégé**

Circuit intégré, comprenant un dispositif de mémoire (DM) comportant un plan mémoire (SMA) ayant des cellules mémoires non volatiles et étant non observable en lecture depuis l'extérieur du dispositif de mémoire, des moyens de commande (MCM), internes au dispositif de mémoire, configurés pour détecter le contenu mémorisé du plan mémoire, et lorsque le contenu mémorisé contient un contenu de verrouillage, verrouiller automatiquement tout accès au plan mémoire depuis l'extérieur du dispositif de mémoire, le circuit intégré étant alors dans un statut verrouillé, et autoriser une délivrance à l'extérieur du dispositif de mémoire d'au moins une donnée dite sensible (DTS) stockée dans le plan-mémoire.

## Description

Des modes de mise en oeuvre et de réalisation concernent les circuits intégrés, et plus particulièrement la protection de circuits intégrés contenant des données sensibles.

Lorsqu'un circuit intégré sort de fabrication, et qu'il est destiné à stocker au moins une donnée sensible contribuant à assurer la fonctionnalité d'un domaine fonctionnel du circuit intégré, par exemple une clé de cryptage ou une donnée de base intervenant dans la génération d'une clé de cryptage, il existe un besoin de protéger le circuit intégré, en particulier avant sa livraison chez un utilisateur ou bien après sa livraison, contre des tentatives d'extraction de cette donnée sensible par un tiers mal intentionné.

Une solution connue de l'art antérieur consiste à verrouiller un accès à la donnée sensible stockée dans le circuit intégré en utilisant des fusibles destinés à être claqués pour effectuer ce verrouillage d'accès. Mais, de tels fusibles claqués peuvent être réactivés en utilisant des techniques dites de FIB (Focused Ion Beam) permettant de modifier l'état de certains composants du circuit intégré.

Il existe par conséquent un besoin de protéger plus efficacement un tel circuit intégré.

Selon un mode de mise en oeuvre et de réalisation, il est proposé d'identifier un circuit intégré sortant de fabrication et, après y avoir stocké au moins une donnée sensible, de le verrouiller avec un mécanisme irréversible avant introduction de ce produit sur le marché, c'est-à-dire livraison à un utilisateur final.

Selon un mode de mise en oeuvre et de réalisation, il est proposé un système de verrouillage dont toute tentative de déverrouillage conduit à la destruction d'au moins une partie de la donnée sensible.

Selon un mode de mise en oeuvre et de réalisation, il est prévu d'équiper le circuit intégré d'un dispositif de mémoire comportant un plan-mémoire incluant des cellules-mémoire non volatiles du type à grille flottante. Le plan-mémoire est subdivisé en plusieurs zones-mémoire, dont une zone-mémoire destinée à stocker la donnée sensible, et une ou plusieurs autres zones-mémoire sont destinées à définir le statut du circuit intégré.

Ainsi, si le plan-mémoire comporte un premier contenu ou motif de référence, le circuit intégré est considéré comme ayant un statut dit « déverrouillé » et l'on peut alors par exemple, en sortie de fabrication, effectuer une série de tests du plan-mémoire.

On peut alors en particulier y stocker un deuxième contenu ou motif de référence correspondant à un statut dit « verrouillé » du circuit intégré. Ce deuxième contenu ou motif de référence forme alors un contenu ou motif de verrouillage. Et, dans ce cas, la donnée sensible est stockée dans la zone-mémoire correspondante du plan-mémoire et l'accès en écriture du dispositif de mémoire est verrouillé. Il devient alors possible pour le dispositif-mémoire, de délivrer en sortie la donnée sensible.

Le dispositif de mémoire n'est accessible qu'en écriture (programmation ou effacement) c'est-à-dire qu'il est totalement inobservable de l'extérieur. En d'autres termes, il n'est pas possible pour un utilisateur externe de lire le contenu du plan-mémoire.

Par contre, une logique dédiée, interne au dispositif de mémoire, peut balayer le plan-mémoire pour détecter le contenu mémorisé, et dans le cas où le deuxième contenu de référence est détecté, verrouiller l'accès en écriture au plan mémoire et autoriser la délivrance de la donnée sensible à l'extérieur du dispositif de mémoire.

Ainsi selon un aspect, il est proposé un circuit intégré, comprenant un dispositif de mémoire comportant un plan mémoire ayant des cellules mémoires non volatiles, avantageusement du type à grille flottante, et étant non observable en lecture depuis l'extérieur du dispositif de mémoire, des moyens de commande, internes au dispositif de mémoire, configurés pour détecter le contenu mémorisé du plan mémoire, et lorsque le contenu mémorisé contient un contenu de verrouillage,
- verrouiller, avantageusement automatiquement et avantageusement de façon irréversible, tout accès au plan mémoire depuis l'extérieur du dispositif de mémoire, le circuit intégré étant alors dans un statut verrouillé, et
- autoriser une délivrance à l'extérieur du dispositif de mémoire d'au moins une donnée dite sensible stockée dans le plan-mémoire.

Lorsque le circuit intégré comprend au moins un domaine fonctionnel, par exemple un domaine incluant des moyens de cryptage/décryptage, ladite au moins une donnée sensible contribue avantageusement à assurer la fonctionnalité du domaine fonctionnel.

Selon un mode de réalisation, le plan-mémoire est accessible uniquement en écriture depuis l'extérieur du dispositif de mémoire et comprend une interface configurée pour recevoir des données à écrire dans le plan-mémoire.

Le dispositif de mémoire comprend également des moyens de traitement, par exemple des moyens de programmation et/ou d'effacement, configurés pour, lorsque le plan-mémoire contient un contenu particulier correspondant à un statut dit « déverrouillé » du circuit intégré, stocker dans le plan-mémoire via l'interface, le contenu ou motif de verrouillage correspondant au statut « verrouillé » du circuit intégré et ladite au moins une donnée sensible.

Les moyens de commande, internes au dispositif de mémoire, sont configurés pour lorsque le contenu mémorisé contient le contenu de verrouillage, interdire avantageusement de façon irréversible, tout accès au plan-mémoire via ladite interface et autoriser une délivrance de ladite donnée sensible à l'extérieur du dispositif de mémoire.

Selon un mode de réalisation, les cartographies (« mapping » en langue anglaise) respectives du contenu particulier et du contenu de verrouillage, la localisation de ladite au moins une donnée sensible dans le plan-mémoire ainsi que les caractéristiques structurelles du plan-mémoire sont telles que lorsque le circuit intégré est dans son statut verrouillé, une tentative de modification du contenu mémorisé dans le plan-mémoire, par exemple une tentative de programmation de certaines cellules-mémoire effacées et/ou une tentative de revenir au contenu particulier, placent le circuit intégré dans un statut dit « invalide » interdisant la délivrance de ladite au moins une donnée sensible à l'extérieur du dispositif de mémoire et/ou détruisent au moins une partie de ladite au moins une donnée sensible mémorisée, c'est-à-dire changent la valeur logique d'un ou de plusieurs bits de cette donnée sensible.

Plus particulièrement, les cellules-mémoire étant en général mutuellement accolées, la taille surfacique de chaque cellule-mémoire est inférieure à une taille limite, par exemple 0,1 micron carré.

A titre d'exemple, la taille d'une cellule-mémoire peut être égale à 0,04 micron carré.

Ainsi, même si un tiers mal intentionné essaie de modifier l'état d'une cellule-mémoire en utilisant un rayonnement ultraviolet tout en tenant de masquer d'autres cellules-mémoire adjacentes dont il ne souhaite pas modifier l'état, par exemple par un moyen de masquage tel qu'une goutte d'encre, la taille des cellules-mémoire conduira néanmoins à la modification de l'état des cellules masquées, en particulier par diffraction du rayonnement ultraviolet.

De même, la taille de ces cellules-mémoire va rendre extrêmement difficile voire impossible la modification de leur état par une technique de FIB.

Les moyens de commande sont avantageusement configurés pour détecter le contenu mémorisé dans le plan mémoire et signaler une anomalie si le contenu mémorisé est différent du contenu particulier ou du contenu de verrouillage.

Le signalement de cette anomalie peut avoir par exemple pour conséquence un blocage du circuit intégré, puisque le statut du circuit intégré serait alors un statut dit « invalide ».

Le contenu particulier peut comporter un premier contenu de référence qui est par exemple au moins une partie du contenu du plan mémoire obtenu à l'issue de la fabrication du circuit intégré.

Comme on le verra plus en détails ci-après, ce premier contenu de référence peut se caractériser par un certain nombre de cellules mémoire d'une zone du plan mémoire à l'état effacé.

Cela étant si avant de mémoriser le contenu de verrouillage dans le plan mémoire, on souhaite effectuer un ou plusieurs tests de ce plan mémoire avec un ou plusieurs motifs de test, il est alors avantageux, selon un mode de réalisation, que le ou les motifs de test soient également représentatifs du statut déverrouillé. En effet si tel n'était pas le cas, l'écriture d'un tel motif de test dans le plan mémoire conduirait à un statut invalide pouvant bloquer le circuit intégré.

En d'autres termes, selon un mode de réalisation particulièrement avantageux, et dans l'optique de la réalisation de test (s) du plan mémoire, le contenu particulier appartient au groupe formé par le premier contenu de référence et par au moins un premier contenu de test destiné à être utilisé pour tester le plan mémoire avant la mémorisation du contenu de verrouillage.

Par exemple un premier contenu de test particulièrement intéressant peut comporter des « 0 » logiques et des « 1 » logiques formant ensemble un damier.

Un deuxième contenu de test, également particulièrement intéressant, peut comporter un damier inversé par rapport au damier du premier contenu de test.

Selon un mode de réalisation, chaque cellule-mémoire est configurée pour posséder un premier état correspondant à une première logique d'un bit stocké dans cette cellule-mémoire.

Ce premier état peut ainsi correspondre à l'état effacé de la cellule-mémoire, le bit stocké dans cette cellule-mémoire à l'état effacé ayant alors par exemple la valeur logique 1.

Chaque cellule-mémoire est également configurée pour posséder un deuxième état correspondant à une deuxième valeur logique du bit stocké dans cette cellule-mémoire.

Ainsi, par exemple, le deuxième état correspond à l'état programmé de la cellule-mémoire, le bit stocké dans cette cellule-mémoire à l'état programmé ayant alors la valeur logique 0.

Ladite au moins une donnée sensible comporte au moins un bit, mais généralement plusieurs bits, par exemple 64 ou 128 bits.

Le plan-mémoire comporte par exemple une première zone contenant une ou plusieurs premières cellules-mémoire configurées pour stocker respectivement le ou les bits de ladite au moins une donnée sensible.

Le plan-mémoire comporte également par exemple une deuxième zone et une troisième zone.

Selon un mode de réalisation, dans le statut verrouillé, la première zone contient ladite au moins une donnée sensible tandis que les cellules-mémoire de la deuxième zone sont dans leur premier état, par exemple l'état effacé, et les cellules-mémoire de la troisième zone sont dans leur deuxième état, par exemple l'état programmé, les valeurs logiques des bits des cellules-mémoire de la deuxième zone et de la troisième zone formant le contenu de verrouillage.

Le fait que les cellules-mémoire de la deuxième zone soient à l'état effacé, stockant avantageusement un bit de valeur logique « 1 », est particulièrement intéressant car cela permet de contrecarrer des attaques visant à bloquer un bus ou un amplificateur de lecture (« sense amplifier ») avec des valeurs logiques « 0 ».

Selon un mode de réalisation, dans le statut déverrouillé, ladite au moins une donnée sensible n'est pas stockée dans la première zone et la troisième zone comporte un nombre, supérieur à un seuil, de cellules-mémoire dans leur premier état, par exemple l'état effacé, les valeurs logiques de ces cellules-mémoire dans leur premier état formant le premier contenu de référence.

Ce seuil peut être égal à 90% du nombre de cellules-mémoire de la troisième zone.

En effet, en sortie de fabrication, les cellules-mémoire du plan-mémoire sont dans leur état vierge, c'est-à-dire qu'elles sont généralement dans un état effacé mais certaines d'entre elles peuvent être néanmoins dans un état correspondant à un état programmé.

Le nombre de premières cellules-mémoire (c'est-à-dire les cellules-mémoire de la première zone destinée à contenir le ou les bits de la donnée sensible) est avantageusement inférieur au nombre de cellules-mémoire de la troisième zone et ces premières cellules-mémoire sont dispersées au sein du plan-mémoire.

A titre indicatif, le nombre de premières cellules-mémoire peut être inférieur à 15%, par exemple égal à 10%, du nombre de cellules-mémoire du plan-mémoire.

De même, le nombre de deuxièmes cellules-mémoire, c'est-à-dire les cellules-mémoire de la deuxième zone, est avantageusement inférieur au nombre de cellules-mémoire de la troisième zone et les deuxièmes cellules-mémoire sont également dispersées au sein du plan-mémoire.

Le nombre de deuxièmes cellules-mémoire est avantageusement également inférieur à 15%, par exemple égal à 10%, du nombre de cellules-mémoire du plan-mémoire.

Ainsi, par exemple, 80% des cellules-mémoire du plan-mémoire sont des cellules-mémoire de la troisième zone, 10% de ces cellules-mémoire sont des premières cellules-mémoire et 10% de ces cellules-mémoire sont des cellules-mémoire de la deuxième zone.

Selon un mode de réalisation, de façon à mémoriser le contenu de verrouillage et ladite au moins une donnée sensible, les moyens de traitement sont configurés pour
- placer dans leur premier état (par exemple l'état effacé) toutes les cellules-mémoire du plan-mémoire, puis
- stocker ladite au moins une donnée sensible dans la ou les premières cellules-mémoire, puis
- placer toutes les cellules-mémoire de la troisième zone dans leur deuxième état (l'état programmé).

Les cellules-mémoire de la deuxième zone, qui ont été préalablement effacées, restent dans leur état effacé.

Selon un mode de réalisation, les moyens de commande comportent
- des moyens de verrouillage configurés pour, en présence d'un signal de commande, verrouiller l'accès du plan mémoire en écriture, et
- un bloc de contrôle configuré pour détecter le contenu mémorisé dans le plan-mémoire et pour, lorsque le contenu de verrouillage est détecté, délivrer le signal de commande aux moyens de verrouillage et délivrer ladite au moins une donnée sensible à l'extérieur du dispositif de mémoire.

Le circuit intégré comprend également en outre avantageusement une mémoire temporaire configurée pour stocker ladite au moins une donnée sensible lorsque le circuit intégré est dans son statut déverrouillé, et les moyens de traitement sont configurés pour copier ladite au moins une donnée sensible dans la ou les première cellules-mémoire et pour effacer la mémoire temporaire, lorsque l'on passe du statut déverrouillé au statut verrouillé.

Le bloc de contrôle est également avantageusement configuré pour signaler ladite anomalie si le contenu mémorisé est différent du contenu particulier ou du contenu de verrouillage.

Les cellules-mémoire sont avantageusement des cellules-mémoire ayant chacune une grille flottante, une grille de commande et un transistor de sélection enterré dans un substrat.

Le circuit intégré peut former un microcontrôleur.

Selon un autre aspect, il est proposé un procédé de protection d'un circuit intégré, comprenant
- équiper le circuit intégré d'un dispositif de mémoire comportant un plan mémoire ayant des cellules mémoires non volatiles et étant non observable en lecture depuis l'extérieur du dispositif de mémoire,
- faire détecter par le dispositif de mémoire lui-même le contenu mémorisé du plan mémoire, et
- lorsque le contenu mémorisé contient un contenu de verrouillage, faire verrouiller, avantageusement automatiquement, par le dispositif de mémoire lui-même, tout accès au plan mémoire depuis l'extérieur du dispositif de mémoire, le circuit intégré étant alors dans un statut verrouillé, et faire autoriser par le dispositif de mémoire lui-même une délivrance à l'extérieur du dispositif de mémoire d'au moins une donnée dite sensible stockée dans le plan-mémoire.

Ce verrouillage est avantageusement irréversible et est effectué après la fabrication du circuit intégré et avant livraison du circuit intégré à un utilisateur.

Ladite au moins une donnée sensible est avantageusement mémorisée dans le plan mémoire lorsque le plan mémoire contient un contenu particulier, correspondant à un statut dit « déverrouillé » du circuit intégré, et obtenu par exemple à partir de cellules-mémoire à l'état vierge résultant de la fabrication du circuit intégré. Cette donnée sensible est mémorisée dans le plan mémoire avant son verrouillage déclenché par le stockage du contenu de verrouillage.

Selon un mode de mise en oeuvre dans lequel le dispositif de mémoire comportant une interface,
- l'étape b) comprend en outre, lorsque le plan mémoire contient un contenu particulier correspondant à un statut dit déverrouillé du circuit intégré, une mémorisation dans le plan mémoire via l'interface, du contenu de verrouillage et de ladite au moins une donnée sensible, et
- l'étape c) comprend faire interdire par le dispositif de mémoire tout accès au plan mémoire via ladite interface et faire autoriser par le dispositif de mémoire lui-même la délivrance de ladite au moins une donnée sensible à l'extérieur du dispositif de mémoire.

Selon un mode de mise en oeuvre, l'étape a) est effectuée lors de la fabrication du circuit intégré, et les étapes b) et c) sont effectuées après la fabrication du circuit intégré et avant une livraison du circuit intégré à un utilisateur.

Selon un mode de mise en oeuvre, le procédé comprend après livraison du circuit intégré à l'utilisateur, lors du fonctionnement du circuit intégré, avant toute opération effectuée par le circuit intégré nécessitant au moins une utilisation de ladite au moins une donnée sensible, une détection par le dispositif de mémoire, du contenu mémorisé du plan mémoire, et si le contenu mémorisé contient le contenu de verrouillage, une délivrance par le dispositif de mémoire de ladite au moins une donnée sensible à l'extérieur du dispositif de mémoire.

Selon un mode de mise en oeuvre, lorsque le circuit intégré est dans son statut verrouillé, une tentative de modification du contenu mémorisé dans le plan mémoire, place le circuit dans un statut dit invalide interdisant la délivrance de ladite au moins une donnée sensible à l'extérieur du dispositif de mémoire et/ou détruit au moins une partie de ladite au moins une donnée sensible mémorisée.

Selon un mode de mise en oeuvre, le dispositif de mémoire signale une anomalie si le contenu mémorisé est différent du contenu particulier ou du contenu de verrouillage.

Selon un mode de mise en oeuvre, le contenu particulier comporte un premier contenu de référence qui est au moins une partie du contenu du plan mémoire obtenu à l'issu de la fabrication du circuit intégré.

Le contenu particulier peut aussi appartenir au groupe formé par le premier contenu de référence et au moins un premier contenu de test, et l'étape b) comprend en outre un test de plan mémoire avec ledit au moins un premier contenu de test.

Selon un mode de mise en oeuvre, dans le statut déverrouillé, on ne stocke ladite au moins une donnée sensible dans une mémoire temporaire distincte du plan mémoire, et la mémorisation du contenu de verrouillage comprend un effacement de toutes les cellules-mémoire du plan mémoire, puis un stockage de ladite au moins une donnée sensible dans le plan mémoire et une écriture du contenu de verrouillage dans la plan mémoire et un effacement de la mémoire temporaire.

Selon un mode de mise en oeuvre, la taille surfacique de chaque cellule-mémoire est inférieure à une taille limite.

Selon un mode de mise en oeuvre, chaque cellule-mémoire est configurée pour posséder un premier état correspondant à une première valeur logique d'un bit stocké dans cette cellule-mémoire et un deuxième état correspondant à une deuxième valeur logique du bit stocké dans cette cellule-mémoire.

Ladite au moins une donnée sensible comporte au moins un bit et le plan mémoire comporte une première zone contenant une ou plusieurs premières cellules-mémoires configurées pour stocker respectivement le ou les bits de ladite au moins une donnée sensible, une deuxième zone et une troisième zone.

Dans le statut verrouillé, on stocke ladite au moins une donnée sensible dans la ou les premières cellules-mémoire, on place les cellules-mémoires de la deuxième zone dans leur premier état et les cellules-mémoires de la troisième zone dans leur deuxième état, les valeurs logiques des bits des cellules-mémoires de la deuxième zone et de la troisième zone formant le contenu de verrouillage.

Selon un mode de mise en oeuvre, le premier état correspond à l'état effacé de la cellule-mémoire, le bit stocké dans cette cellule-mémoire à l'état effacé ayant la valeur logique 1, et le deuxième état correspond à l'état programmé de la cellule-mémoire, le bit stocké dans cette cellule-mémoire à l'état programmé ayant la valeur logique 0.

Selon un mode de mise en oeuvre, dans le statut déverrouillé, on ne stocke pas ladite au moins une donnée sensible dans la première zone et la troisième zone comporte un nombre, supérieur à un seuil, de cellules-mémoires de la troisième zone étant dans leur premier état, les valeurs logiques de ces cellules-mémoires dans leur premier état formant le premier contenu de référence.

Selon un mode de mise en oeuvre, le seuil est égal à 90% du nombre de cellules-mémoires de la troisième zone.

Selon un mode de mise en oeuvre, le nombre de premières cellules-mémoires est inférieur au nombre de cellules-mémoires de la troisième zone et on disperse les premières cellules-mémoires au sein du plan mémoire.

Selon un mode de mise en oeuvre, le nombre de premières cellules-mémoires est inférieur à 15% du nombre de cellules-mémoires du plan mémoire.

Selon un mode de mise en oeuvre, le nombre de cellules-mémoire de la deuxième zone est inférieur au nombre de cellules-mémoires de la troisième zone et on disperse les cellules-mémoire de la deuxième zone au sein du plan mémoire.

Selon un mode de mise en oeuvre, le nombre de cellules-mémoire de la deuxième zone est inférieur à 15% du nombre de cellules-mémoires du plan mémoire.

Selon un mode de mise en oeuvre, pour mémoriser le contenu de verrouillage et ladite au moins une donnée sensible, on place dans leur premier état toutes les cellules-mémoire du plan mémoire, puis on stocke ladite au moins une donnée sensible dans la ou les premières cellules-mémoires, puis on place toutes les cellules-mémoire de la troisième zone dans leur deuxième état.

Selon un mode de mise en oeuvre, le procédé comporte en outre un stockage de ladite au moins une donnée sensible dans une mémoire temporaire lorsque le circuit intégré est dans son statut déverrouillé, et lors du passage au statut verrouillé, on copie ladite au moins une donnée sensible dans la ou les premières cellules-mémoire et on efface la mémoire temporaire.

D'autres avantages et caractéristiques de l'invention apparaîtront à l'examen de la description détaillée de modes de mise en oeuvre et de réalisation, nullement limitatifs, et des dessins annexés sur lesquels :
[Fig 1]
[Fig 2]
[Fig 3]
[Fig 4]
[Fig 5]
[Fig 6]
[Fig 7]
[Fig 7A]
[Fig 8]
[Fig 9]
[Fig 9A]
[Fig 9B]
[Fig 10]
[Fig 11]
[Fig 12]
[Fig 13], et
[Fig 14] illustrent schématiquement des modes de mise en oeuvre et de réalisation de l'invention.

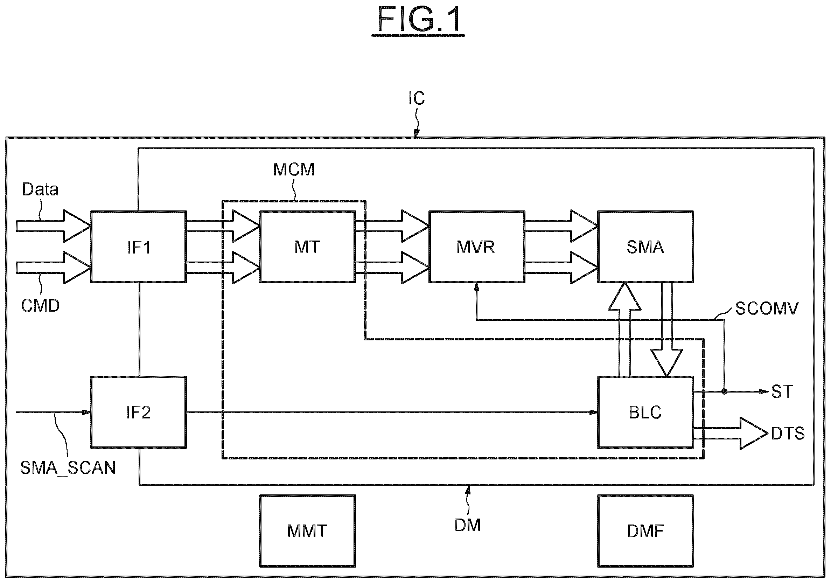

Sur la figure 1, la référence IC désigne un circuit intégré, par exemple un microcontrôleur, comprenant en particulier un dispositif de mémoire DM possédant un plan-mémoire SMA formant ici un plan-mémoire sécurisé.

Comme on le verra plus en détail ci-après, le dispositif de mémoire DM est capable d'avoir un statut dit déverrouillé, par exemple en sortie de fabrication, dans lequel il est possible d'effectuer des tests du plan-mémoire SMA et dans lequel une donnée sensible DTS, contribuant à assurer la fonctionnalité d'un domaine fonctionnel DMF du circuit intégré, est stockée dans une mémoire temporaire MMT.

Le dispositif de mémoire est également destiné à avoir un statut dit verrouillé, dans lequel la donnée sensible DTS est cette fois-ci stockée dans le plan-mémoire SMA.

Le plan-mémoire SMA est accessible depuis l'extérieur, c'est-à-dire via une interface IF1, uniquement en écriture.

Le dispositif de mémoire est ainsi configuré pour recevoir notamment des commandes CMD, par exemple des commandes d'écriture et d'effacement, ainsi que des données Data à écrire dans le plan-mémoire SMA.

Le dispositif de mémoire comprend donc des moyens de traitement MT de structure classique et connue, comportant notamment des décodeurs lignes, des décodeurs colonnes, des pompes de charge, etc, et configurés pour procéder à des programmations ou des effacements des cellules-mémoire du plan-mémoire SMA, de façon à y écrire respectivement des valeurs logiques 0 ou 1.

Par contre, le plan-mémoire SMA n'est pas observable, en lecture, depuis l'extérieur du dispositif de mémoire.

Le dispositif de mémoire DM comporte également des moyens de commande MCM comportant d'une part un bloc de commande BLC, dont on reviendra plus en détails ci-après sur la structure, et configurés pour, en réponse à une commande de balayage SMA_SCAN reçue par l'intermédiaire d'une interface supplémentaire IF2, balayer le plan-mémoire SMA pour en détecter le contenu mémorisé.

Les moyens de commande MCM comportent également des moyens de verrouillage MVR, configurés pour, en réponse à un signal de verrouillage SCOMV émis par le bloc de commande BLC, verrouiller l'accès en écriture du plan-mémoire SMA.

A titre d'exemple limitatif, ces moyens de verrouillage MVR peuvent comporter des interrupteurs, tels que par exemple des transistors MOS, disposés sur le bus de données et le bus de commande du plan-mémoire SMA. Lorsque ces interrupteurs sont fermés, l'accès en écriture est possible et lorsqu'ils sont ouverts, l'accès en écriture est impossible.

Bien entendu, d'autres structures de moyens de verrouillage sont possibles.

Par ailleurs, même si sur la figure 1, les deux interfaces IF1 et IF2 ont été représentées de façon séparée, elles peuvent être bien entendu formées par une seule et même interface.

Le bloc de commande BLC émet également une information de statut ST représentative en particulier du statut déverrouillé ou du statut verrouillé du circuit intégré.

Cela étant, comme on le verra plus en détail ci-après, l'information de statut ST peut également être représentative d'un statut dit invalide du circuit intégré, lorsque celui-ci n'est ni dans son statut verrouillé ni dans son statut déverrouillé.

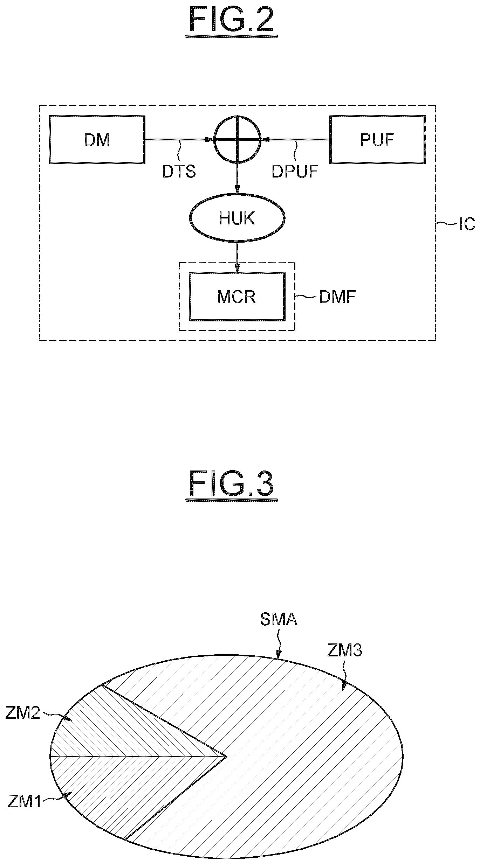

Le domaine fonctionnel DMF du circuit intégré ici peut être, comme illustré très schématiquement sur la figure 2, un domaine comportant des moyens de cryptage/décryptage MCR, destinés à recevoir une clé de cryptage HUK résultant par exemple d'une opération logique, par exemple un « OU » exclusif, entre la donnée sensible DTS délivrée par le dispositif de mémoire, et une donnée DPUF délivrée par un dispositif de fonction physiquement non clonable PUF, de structure classique et connue en soi.

Et, cette donnée DTS, qui est une donnée sensible, contribue à assurer la fonctionnalité du domaine fonctionnel DMF, en particulier des moyens de cryptage/décryptage. Ainsi, si la donnée sensible DTS est corrompue ou partiellement détruite, le domaine DMF n'est plus fonctionnel.

Comme illustré sur la figure 3, le plan-mémoire SMA comporte ici trois zones-mémoire ZM1, ZM2 et ZM3.

Comme on le verra ci-après, la zone-mémoire ZM1 est destinée à stocker dans ses cellules-mémoire, les bits de la donnée sensible DTS tandis que, dans cet exemple, les cellules-mémoire des zones ZM2 et ZM3 sont destinées à stocker un contenu particulier (par exemple un premier contenu de référence qui est une partie du contenu du plan mémoire obtenu à l'issue de la fabrication du circuit intégré) ou un deuxième contenu de référence (également appelé contenu de verrouillage) respectivement représentatifs du statut déverrouillé et du statut verrouillé du circuit intégré IC.

Il est également possible comme on le verra ci-après que l'ensemble du plan mémoire stocke en tant que contenu particulier représentatif du statut déverrouillé, un ou plusieurs contenus de tests, par exemple un « damier » ou un « damier inversé ».

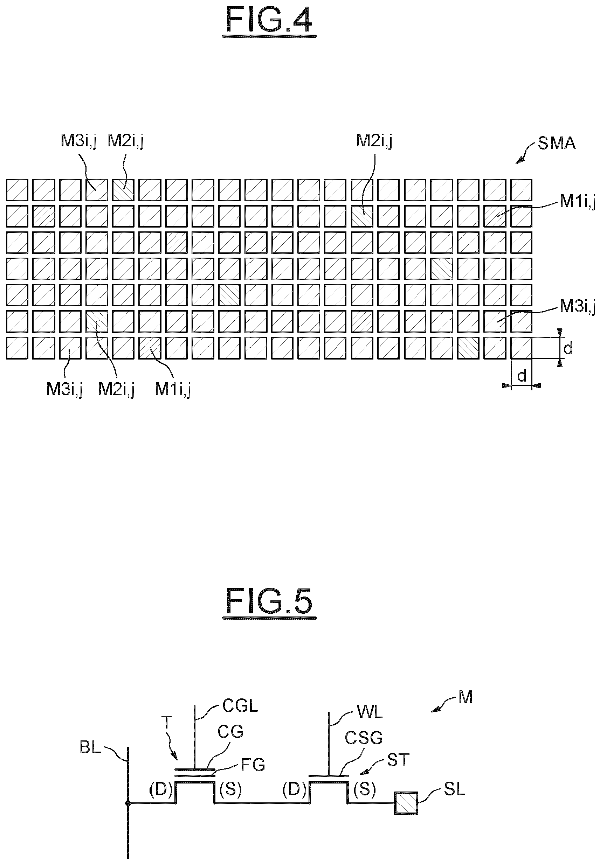

Comme illustré très schématiquement sur la figure 4, la matrice de cellules-mémoire, arrangées en lignes et en colonnes, du plan-mémoire SMA comporte majoritairement des cellules-mémoire M3i,j de la troisième zone-mémoire ZM3 et quelques cellules M2i,j de la deuxième zone-mémoire ZM2.

La première zone-mémoire ZM1 comporte autant de cellules-mémoire M1i,j, dénommées premières cellules-mémoire, qu'il y a de bits dans la donnée sensible DTS.

A titre d'exemple non limitatif, la matrice de cellules-mémoire comporte 80% de cellules-mémoire M3i,j, 10% de cellules-mémoire M2i,j, et 10% de premières cellules-mémoire M1i,j.

Par ailleurs, comme illustré sur la figure 4, les cellules-mémoire M1i,j, et les cellules-mémoire M2i,j, sont dispersées au sein de la matrice de cellules-mémoire du plan-mémoire SMA.

Par ailleurs, chaque cellule-mémoire occupe sensiblement un emplacement carré sur le silicium, le côté d du carré étant par exemple ici de l'ordre de 0,2 micron conduisant à une taille surfacique de l'ordre de 0,04 micron carré.

Et, deux cellules-mémoire adjacentes sont accolées, même si sur la figure 4, elles sont représentées espacées à des fins d'une plus grande clarté de la figure.

La taille de ces cellules-mémoire, ainsi que la dispersion des cellules-mémoire M2i,j au sein du plan-mémoire notamment, rendent extrêmement difficile voire impossible, une attaque par un tiers mal intentionné du plan-mémoire SMA à l'aide d'un rayonnement ultraviolet par exemple en vue d'effacer sélectivement certaines cellules-mémoire sans effacer les autres.

Ainsi, si un attaquant veut effacer une cellule M3i,j située à côté d'une cellule M1i,j contenant un bit de la donnée sensible, sans vouloir effacer le bit de cette donnée sensible, il pourrait être tenté de masquer cette cellule M1i,j avec un moyen de masquage, tel qu'une goutte d'encre, de façon à ce que le rayonnement ultraviolet ne vienne pas impacter cette cellule.

Cependant, compte tenu de la petite taille des cellules, un rayonnement ultraviolet venant impacter la cellule M3i,j voisine de cette cellule M1i,j masquée par la goutte d'encre, va néanmoins effacer le contenu de cette cellule M1i,j par diffraction.

De même, il sera extrêmement difficile voire impossible, pour un attaquant d'effectuer une attaque par une technique de FIB de façon à programmer sélectivement certaines cellules-mémoires sans programmer les cellules-mémoire adjacentes.

Les cellules-mémoires M1i,j M2i,j et M3i,j sont toutes ici des cellules non volatiles du type à grille divisée.

Sur la figure 5, la référence M désigne une telle cellule mémoire non volatile du type à grille divisée, par exemple du type à transistor de sélection ayant une grille verticale enterrée dans le substrat d'un circuit intégré.

Plus précisément, la cellule mémoire M comporte un transistor d'état T comportant une grille flottante FG surmontée par une grille de commande CG reliée à une ligne de contrôle de grille CGL.

Le drain (D) du transistor d'état T est relié à une ligne de bits BL tandis que la source (S) du transistor d'état T est reliée au drain d'un transistor de sélection ST.

Le transistor de sélection ST comporte une grille CSG reliée à une ligne de mots WL.

La source (S) du transistor de sélection ST est reliée à une ligne de source SL.

Avec de telles cellules-mémoires, différentes structures de plan mémoire sont possibles, à savoir une structure à une seule ligne de bits par colonne ou une structure à deux (ou double) lignes de bits par colonne.

Cela étant une structure à deux lignes de bits par colonne, comme par exemple décrite dans la demande brevet français publiée sous le n° 3049380 ou bien dans la demande brevet français publiée sous le n° 3036221, est particulièrement avantageuse car elle simplifie notamment la lecture des cellules mémoire en ce sens qu'il n'est pas nécessaire de prévoir l'application d'une tension d'inhibition sur une cellule mémoire jumelle de la cellule mémoire devant être lue.

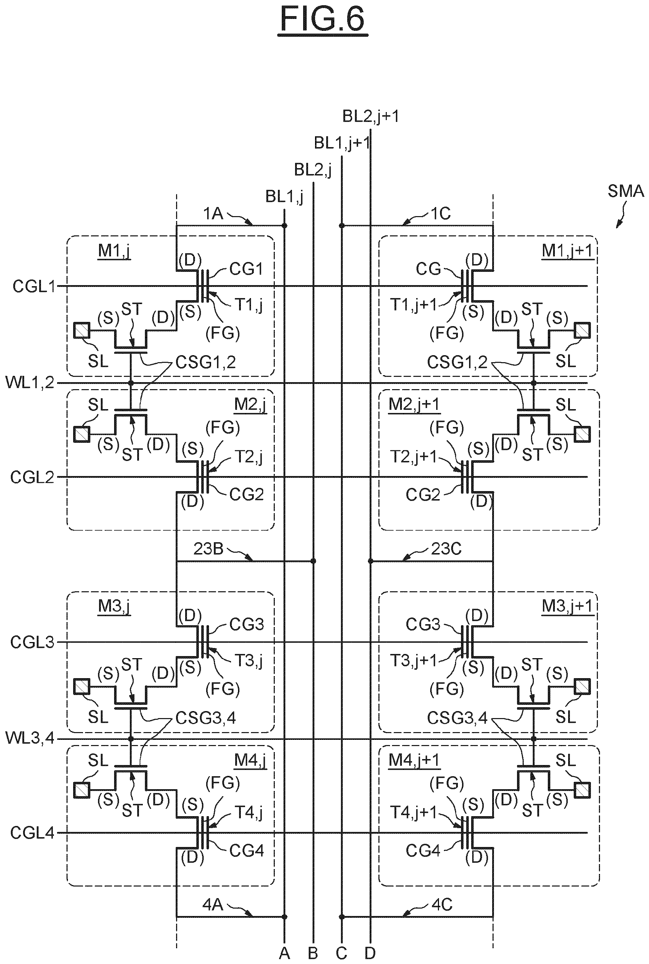

A titre d'exemple, la figure 6 représente une structure de plan mémoire SMA à deux lignes de bits par colonne et comprenant des cellules mémoire Mi,j ; Mi,j+1 _{;} Mi-1,j ; Mi-1,j+1 du type décrit dans la demande de brevet US 2013/0228846.

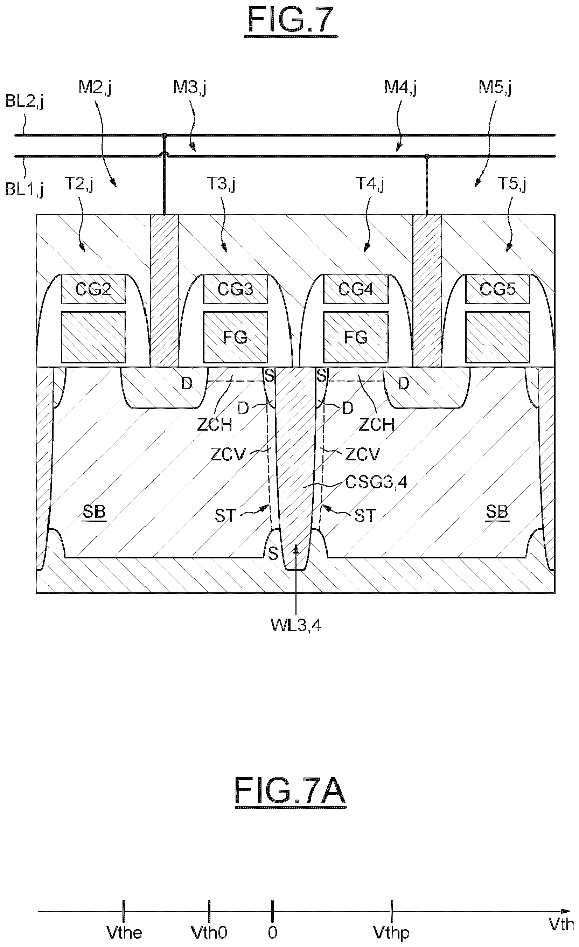

A des fins de simplification et de clarté, les cellules-mémoire référencées sur les figures 6 et 7 désignent indistinctement les cellules mémoire M1i,j ou M2i,j ou M3i,j situées dans les zones mémoire ZM1, ZM2 et ZM3 du plan mémoire SMA illustré sur les figures 3 et 4.

La figure 6 est le schéma électrique d'un mode de réalisation d'un tel plan mémoire SMA, réalisé dans un substrat semi-conducteur. Le plan mémoire comprend des rangées et des colonnes de cellules mémoire.

A des fins de simplification et de clarté, seules huit cellules mémoire M1,j, M2,j, M3,j, M4,j, M1,j+1, M2,j+1, M3,j+1, M4,j+1 appartenant aux rangées 1, 2, 3 et 4 et aux colonnes j et j+1 sont représentées ici. Chaque cellule mémoire comporte un transistor d'état à grille flottante (FG), respectivement T1,j, T2,j, T3,j, T4,j, T1,j+1, T2,j+1, T3,j+1, T4,j+1, et un transistor de sélection ST dont la borne de drain (D) est reliée à la borne de source (S) du transistor à grille flottante.

Les cellules-mémoires M1,j, M2,j, M3,j, M4,j appartiennent à une colonne de rang j et les cellules-mémoires M1,j+1, M2,j+1, M3,j+1, M4,j+1 appartiennent à une colonne adjacente de rang j+1. Les cellules-mémoires M1,j, M1,j+1 appartiennent à une première rangée de cellules-mémoires et leurs transistors à grille flottante T1,j, T1,j+1 ont des grilles de commande CG1 connectées à une ligne de contrôle de grille commune CGL1. Les cellules-mémoires M2,j, M2,j + 1 appartiennent à une deuxième rangée de cellules-mémoires et leurs transistors à grille flottante T2,j, T2,j + 1 ont des grilles de commande CG2 connectées à une ligne de contrôle de grille commune CGL2. Les cellules-mémoires M3,j, M3,j+1 appartiennent à une troisième rangée de cellules-mémoires et leurs transistors à grille flottante T3,j, T3,j+1 ont des grilles de commande CG3 connectées à une ligne de contrôle de grille commune CGL3. Les cellules-mémoires M4,j, M4,j + 1 appartiennent à une quatrième rangée de cellules-mémoires et leurs transistors à grille flottante T4,j, T4,j + 1 ont des grilles de commande CG4 connectées à une ligne de contrôle de grille commune CGL4.

Dans la colonne de rang j, les cellules-mémoires M1,j, M2,j sont des cellules-mémoires jumelles et leur transistors de sélection ST comportent une grille de sélection commune CSG1,2 reliée à une ligne de mot commune WL1,2.

De même, les cellules-mémoires M3,j, M4,j sont des cellules-mémoires jumelles et leur transistors de sélection ST comportent une grille de sélection commune CSG3,4 reliée à une ligne de mot commune WL3,4.

Dans la colonne de rang j+1, les cellules-mémoires M1,j+1, M2,j+1 sont des cellules-mémoires jumelles et leur transistors de sélection ST comportent une grille de sélection commune CSG1,2 reliée à la ligne de mot WL1,2.

Les cellules-mémoires M3,j+1, M4,j+1 sont des cellules-mémoires jumelles et leur transistors de sélection ST comportent une grille de sélection commune CSG3,4 reliée à la ligne de mot commune WL3,4.

Les grilles de sélection communes CSG1,2 ou CSG3,4 des paires de cellules-mémoires jumelles sont des grilles verticales enterrées réalisées sous forme de tranchées conductrices pratiquées dans le substrat, et les bornes de source (S) des transistors de sélection ST sont reliées à un plan de source enterré SL, s'étendant sous de la région du substrat où les cellules-mémoires sont implantées.

Le plan mémoire SMA comprend deux lignes de bit par colonne de cellules-mémoires. Ainsi, deux lignes de bit BL1,j, BL2,j sont attribuées aux cellules-mémoires de la colonne de rang j, et deux lignes de bit BL1,j+1, BL2,j+1 sont attribuées aux cellules-mémoires de la colonne de rang j+1.

Deux cellules-mémoires jumelles sont reliées à des lignes de bit différentes parmi les deux lignes de bit attribuées à la colonne dans laquelle elles se trouvent, tandis que deux cellules-mémoires adjacentes mais non jumelles sont reliées à la même ligne de bit.

Ainsi, dans la colonne de rang j :
- la borne de drain (D) du transistor à grille flottante T1,j est reliée à la ligne de bit BL1,j par l'intermédiaire d'un chemin conducteur 1A,
- la borne de drain du transistor à grille flottante T2,j est reliée à la ligne de bit B2,j par l'intermédiaire d'un chemin conducteur 23B, - la borne de drain du transistor à grille flottante T3,j est reliée à la ligne de bit BL2,j par l'intermédiaire du chemin conducteur 23B (la cellule mémoire M2,j étant adjacente mais non jumelle à la cellule mémoire M3,j), et
- la borne de drain du transistor à grille flottante T4,j est reliée à la ligne de bit BL1,j par l'intermédiaire d'un chemin conducteur 4A.

Dans la colonne de rang j+1 :
- la borne de drain du transistor à grille flottante T1,j+1 est reliée à la ligne de bit BL1,j+1 par l'intermédiaire d'un chemin conducteur 1C,
- la borne de drain du transistor à grille flottante T2,j+1 est reliée à la ligne de bit BL2,j+1 par l'intermédiaire d'un chemin conducteur 23D,
- la borne de drain du transistor à grille flottante T3,j+1 est reliée à la ligne de bit BL2,j+1 par l'intermédiaire du chemin conducteur 23D (la cellule mémoire M2,j+1 étant adjacente mais non jumelle à la cellule mémoire M3,j + 1), et
- la borne de drain du transistor à grille flottante T4,j + 1 est reliée à la ligne de bit BL1,j+1 par l'intermédiaire d'un chemin conducteur 4C.

Comme illustré sur la figure 7, et comme indiqué ci-avant, chaque transistor d'état coopère avec un transistor de sélection vertical enterré dans le substrat SB.

Le canal ZCH du transistor d'état est référencé ZCH.

Les transistors de sélection ST connectés aux deux transistors d'états T3,j et T4,j ont chacun un canal vertical ZCV et une grille de sélection commune verticale enterrée CSG3,4. Il convient de noter qu'à des fins de simplifications de la figure, le contact permettant de relier la grille commune enterrée CSG3,4 à la ligne de mots correspondante WL3,4, n'est pas représenté.

La figure 7 illustre plus précisément les quatre cellules M2,j, M3,j, M4,j, M5,j appartenant à la même colonne j et aux 4 lignes 2 à 5.

Le drain des transistors T2,j et T3,j est connecté à la ligne de bits BL2j et le drain des transistors T4,j et T5,j est connecté à la ligne de bits BLlj qui sont les deux lignes de bits pour la colonne j.

Chaque cellule-mémoire a un premier état, par exemple un état effacé, dans lequel elle stocke un bit ayant une première valeur logique, par exemple la valeur logique 1, et un deuxième état, par exemple un état programmé, dans lequel elle stocke un bit ayant une deuxième valeur logique, par exemple la valeur logique 0.

Le transistor d'état d'une cellule-mémoire est avantageusement configuré pour être passant lorsque la cellule-mémoire est dans son premier état et pour être bloqué lorsque la cellule-mémoire est dans son deuxième état.

Une façon simple d'obtenir un tel transistor d'état est de prévoir par exemple un transistor d'état du type à appauvrissement (« depletion » en langue anglaise) comme décrit dans la demande brevet français précitée publiée sous le n° 3049380.

Comme il est bien connu par l'homme du métier, le transistor MOS à appauvrissement est passant sans tension de commande appliquée sur la grille de commande du transistor d'état (grille de commande reliée à la masse), et par conséquent sur la grille flottante par couplage capacitif. Le transistor d'état est donc dit « normally on ». Par contre, le transistor devient de moins en moins conducteur au fur et à mesure de la tension de commande présente sur la grille de commande augmente en valeur absolue (devient de plus en plus négative) pour finalement se bloquer au-delà d'une tension de blocage.

Le canal ZCH du transistor d'état est avantageusement un canal surfacique de sorte qu'il puisse être possible de pouvoir bloquer la conduction du canal par application d'une tension de commande acceptable sur la grille de commande du transistor d'état.

L'énergie d'implantation des dopants définit la profondeur du canal ZCH. A titre indicatif, cette énergie peut être comprise entre 5keV et 100keV conduisant alors à une profondeur de canal de l'ordre de 100 nm.

Dans le cas d'un canal de type de conductivité N, les dopants implantés peuvent être par exemple de l'arsenic As, et la concentration de dopants détermine la tension de seuil VthO du transistor d'état d'une cellule mémoire à l'état vierge. Le transistor d'état est ici configuré pour avoir une telle tension de seuil VthO négative. A cet égard, on peut utiliser une dose de dopants implantés comprise entre 10¹² atomes/cm² et 10¹⁴ atomes/cm³.

Avec une telle dose de dopants on peut obtenir une tension VthO négative comprise par exemple entre -1 volt et -0,5 volt.

Sur la figure 7A, on a représenté schématiquement les différentes tensions de seuil Vthe, VthO et Vthp correspondant respectivement par exemple à des cellules-mémoires effacées, vierges et programmées.

En mode de lecture, on peut appliquer une tension de lecture nulle sur la grille de commande CG du transistor d'état et appliquer une tension positive sur la ligne de bits BL.

Le transistor d'état étant à appauvrissement avec une tension VthO négative, il est normalement passant pour une cellule mémoire vierge, c'est-à-dire lorsqu'aucune charge n'est présente dans la grille flottante.

Il ressort alors de la figure 7A qu'un transistor d'état d'une cellule mémoire effacée sera passant tandis que le transistor d'état d'une cellule mémoire programmée sera bloqué. Et, le fait d'appliquer une tension nulle sur la grille de commande et par conséquent sur la grille flottante FG du transistor d'état, n'induit pas de stress en lecture (« read stress »).

Par ailleurs la programmation ou l'effacement d'un transistor à grille flottante s'effectue ici par l'injection ou l'extraction des charges électriques dans la grille du transistor par injection d'électrons chauds au moyen de haute(s) tension(s).

Plus particulièrement, l'effacement d'une cellule mémoire est assuré en combinant une tension positive appliquée au substrat à une tension négative appliquée à la grille de commande de son transistor d'état à grille flottante.

Cela étant, le plan mémoire SMA est avantageusement effaçable par bloc de cellules-mémoire.

La programmation d'une cellule mémoire peut être assurée par exemple en appliquant une tension positive à la ligne de bit concernée, en appliquant une tension nulle au substrat, et une tension positive sur la grille de commande de son transistor d'état à grille flottante.

La sélection d'une telle cellule mémoire à programmer s'effectue en appliquant une tension positive supérieure à la tension de seuil du transistor d'état, sur la ligne de mot concernée.

Enfin, comme indiqué ci-avant, la lecture d'une cellule mémoire est assurée en appliquant une tension nulle à la grille de commande CG de son transistor d'état, ainsi qu'une tension positive à la ligne de bit correspondante.

La sélection d'une telle cellule mémoire à lire s'effectue en appliquant une tension positive supérieure à la tension de seuil du transistor d'état, sur la ligne de mot concernée.

En pratique on appliquera en mode lecture une tension nulle sur les grilles de commande de toutes les cellules du plan mémoire.

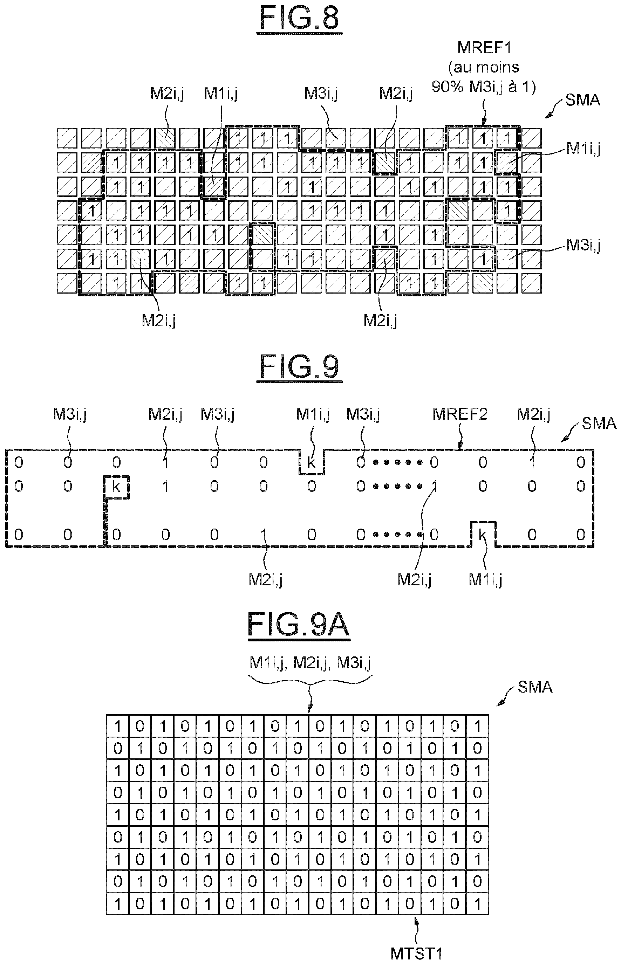

La figure 8 illustre très schématiquement un premier contenu de référence MREF1 susceptible d'être mémorisé dans le plan-mémoire SMA.

Dans cet exemple, le premier contenu de référence MREF1 est caractérisé par au moins 90% des cellules-mémoire M3i,j de la troisième zone-mémoire ZM3 à l'état effacé c'est-à-dire stockant un « 1 » logique, et ce quel que soit le contenu des 10% restants de cellules M3i,j et quel que soit le contenu ou l'état des cellules M1i,j et M2i,j.

Ce premier contenu de référence MREF1 est représentatif du statut déverrouillé du circuit intégré IC.

Il convient de noter également que dans le statut déverrouillé, les premières cellules-mémoire M1i,j ne contienne pas les bits de la donnée sensible DTS.

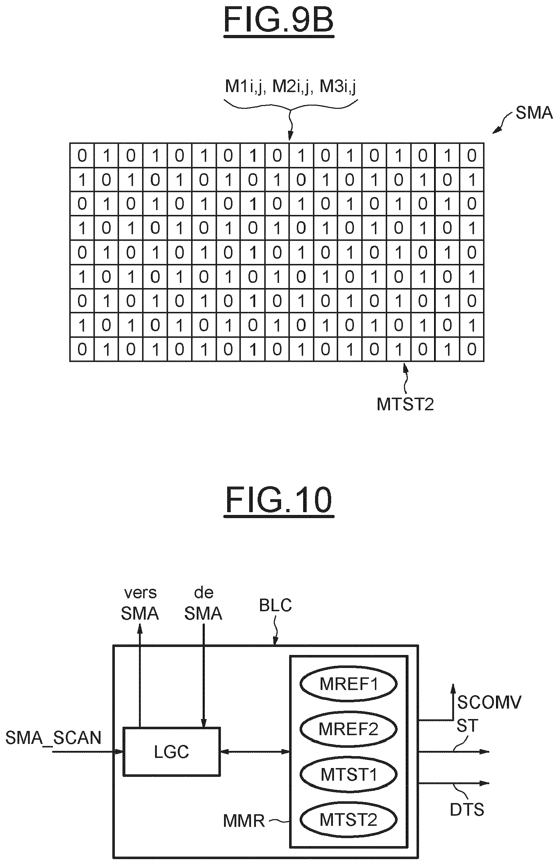

La figure 9 illustre, toujours très schématiquement, un deuxième contenu de référence MREF2 destiné à être stocké dans le plan-mémoire SMA.

Ce deuxième contenu de référence est cette fois-ci représentatif du statut verrouillé du circuit intégré.

Ici, le deuxième contenu de référence comporte toutes les cellules-mémoire M3i,j de la troisième zone-mémoire à l'état programmé, c'est-à-dire contenant un « 0 » logique, et toutes les cellules-mémoire M2i,j à l'état effacé, c'est-à-dire contenant un « 1 » logique.

Dans le statut verrouillé du circuit intégré IC, les premières cellules-mémoire M1i,j stockent les bits k de la donnée sensible DTS.

Même si tous les bits de la donnée DTS sont désignés ici par la valeur arbitraire k, ils ne sont bien entendu pas tous égaux à la même valeur logique.

Comme on le verra ci-après, le bloc de commande est avantageusement configuré pour émettre un signal d'anomalie, conduisant par exemple au blocage du circuit intégré, si le contenu détecté du plan mémoire est différent du premier contenu de référence MREF1 ou du deuxième contenu de référence.

Or c'est seulement lorsque le circuit intégré est dans son statut déverrouillé que l'on peut écrire dans le plan mémoire SMA.

Comme on le verra ci-après, le premier contenu de référence MREF1 est particulièrement avantageux car il est formé par une partie du contenu du plan mémoire SMA à l'issue de la fabrication du circuit intégré.

On peut donc d'ores et déjà écrire dans le plan mémoire sans effectuer d'opérations particulières.

Donc si à ce stade on ne souhaite pas effectuer de test du plan mémoire, on peut directement écrire le contenu de verrouillage MREF2 dans le plan mémoire ainsi que la donnée sensible DTS, de façon à le verrouiller et autoriser la délivrance de la donnée sensible à l'extérieur du dispositif de mémoire DM.

Si par contre on souhaite, préalablement au placement du circuit intégré dans son statut verrouillé, effectuer des tests du plan mémoire SMA avec des contenus de test, il faut que ces contenus de test soient également représentatifs du statut déverrouillé du circuit intégré.

En d'autres termes, dans cette optique, chacun du premier motif de référence et du ou des contenus de test va être considéré comme étant un contenu dit particulier correspondant au statut déverrouillé du circuit intégré.

A titre d'exemple, un premier contenu de test MTST1 intéressant est illustré sur la figure 9A. Dans ce premier contenu de test MTST1, toutes les cellules mémoire du plan mémoire SMA comportent soit un « 0 » logique soit un « 1 » logique de façon à former un damier.

Un deuxième contenu de test possible est le contenu MTST2 illustré sur la figure 9B, qui est un damier inversé par rapport au damier de la figure 9A.

On se réfère maintenant plus particulièrement à la figure 10 pour décrire un mode de réalisation du bloc de commande BLC.

Celui-ci comporte une mémoire MMR, par exemple une mémoire du type ROM, contenant le premier contenu de référence MREF1 et le deuxième contenu de référence MREF2.

Cette mémoire peut également contenir un ou plusieurs contenus de test, ici les deux contenus de test MTST1 et MTST2 car, comme indiqué ci-avant, lorsque le circuit intégré IC est dans un statut déverrouillé, il est tout à fait possible d'effectuer des tests du plan-mémoire.

Le bloc de commande BLC comporte également une logique de commande LGC comportant par exemple une machine d'état associée à des moyens de lecture du plan-mémoire SMA incluant en particulier des amplificateurs de lecture.

Lorsque la logique de commande LGC reçoit le signal de commande de balayage SMA_SCAN, elle balaye toutes les adresses colonnes du plan-mémoire pour lire successivement les bits des différentes lignes stockés dans le plan-mémoire SMA.

Puis, la logique de commande LGC peut comparer le contenu mémorisé ainsi lu avec les contenus stockés dans la mémoire MMR, ici le premier contenu de référence MREF1, le deuxième contenu de référence MREF2 et les deux contenus de test MTST1 et MTST2.

Si le premier contenu de référence MREF1 est détecté, alors le signal de statut ST prend une valeur logique représentative du statut déverrouillé et le plan-mémoire SMA peut être testé avec les motifs de test MTST1 et MTST2 par exemple.

A cet égard, la logique de commande peut incorporer une structure connue par l'homme du métier sous la dénomination anglosaxonne « Built-In Self-Test » (BIST) qui permet au dispositif de mémoire de se diagnostiquer lui-même. Plus précisément, par exemple le contenu de test MTST1 est délivré en entrée du dispositif de mémoire via l'interface IF1. Et, si le contenu mémorisé dans le plan-mémoire à la suite de cette commande d'écriture, correspond effectivement au contenu de test MTST1, la logique de contrôle peut délivrer un signal logique indiquant que le résultat du test est positif (OK).

Comme indiqué ci-avant, lorsque le deuxième contenu de référence MREF2 est détecté, le signal de statut prend une valeur logique correspondant au statut verrouillé du statut intégré, le signal de commande de verrouillage SCOMV est délivré aux moyens de verrouillage verrouillant l'accès en écriture du plan-mémoire et les bits de la donnée DTS sont délivrés en sortie du dispositif de mémoire par le bloc de commande BLC.

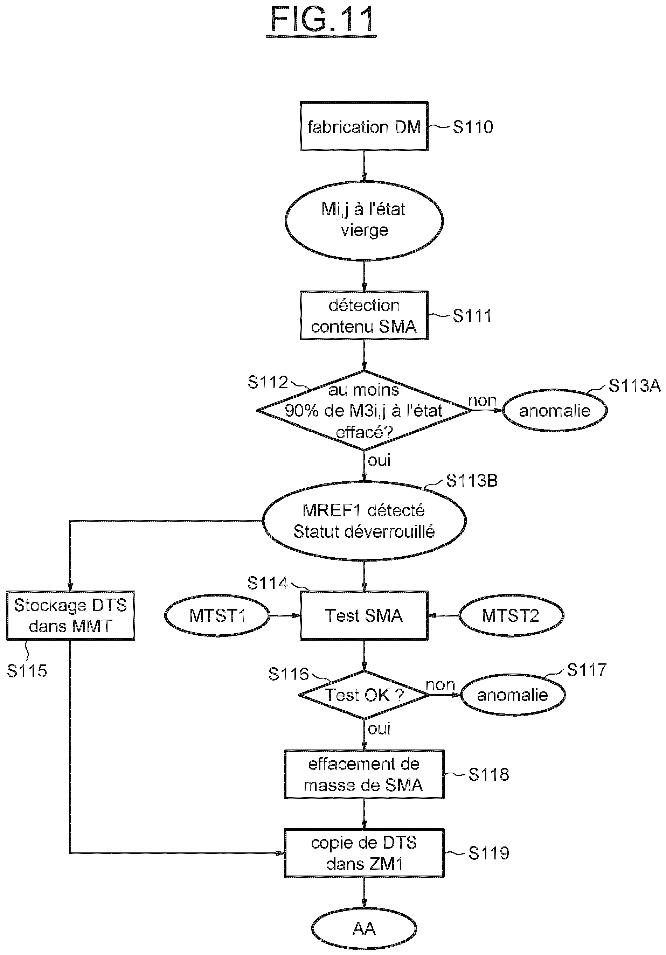

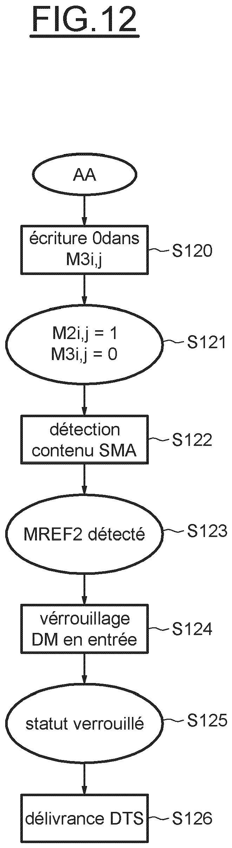

On se réfère maintenant plus particulièrement aux figures 11 et suivantes pour décrire un mode de mise en oeuvre du procédé selon l'invention.

Dans l'étape S110, le dispositif de mémoire et le circuit intégré sont fabriqués de façon classique et connue en soi.

A l'issue de cette fabrication, toutes les cellules-mémoire Mi,j, que ce soit les cellules M1, M2 ou M3, sont à l'état vierge, c'est-à-dire qu'elles n'ont jamais été effacées ou programmées.

Aussi, en général, la majorité des cellules-mémoire à l'état vierge présentent un état effacé mais, certaines d'entre elles peuvent néanmoins présenter un état programmé.

C'est la raison pour laquelle lors de la détection du contenu du plan-mémoire SMA dans l'étape S111, on cherche à détecter si au moins 90% des cellules-mémoire M3i,j de la troisième zone-mémoire sont à l'état effacé (étape S112).

Si ce n'est pas le cas, il y a alors une anomalie (étape S113A) et le procédé s'arrête.

Si par contre, dans l'étape S112, on a au moins détecté 90% de cellules-mémoire M3i,j à l'état effacé, alors la logique de commande LGC considère que le contenu particulier, en l'espèce le premier contenu de référence MREF1, a bien été détecté, ce qui place le circuit intégré IC dans son statut déverrouillé (étape S113B).

Il est alors possible d'écrire des données dans le plan-mémoire pour effectuer notamment un test du plan-mémoire SMA (étape S114) en utilisant un ou plusieurs contenus de test, par exemple les contenus MTST1 et MTST2.

Si l'on utilise d'abord le damier du premier contenu de test MTST1, et que l'on souhaite ensuite effectuer un autre test avec le damier inversé du deuxième contenu de test MTST2, il est possible d'écrire le deuxième contenu de test dans le plan mémoire, car celui-ci est toujours dans son statut déverrouillé (le premier contenu de test est en effet un contenu particulier représentatif du statut déverrouillé). Pour cela on peut effacer les cellules programmées et programmer les cellules effacées du premier contenu de test MTST1.

Une autre possibilité consiste, puisqu'il n'est possible d'écrire dans le plan-mémoire que lorsque le statut déverrouillé est détecté, après chaque test, d'effacer au moins 90% des cellules-mémoire M3i,j et en pratique la totalité des cellules-mémoire du plan-mémoire SMA, pour retrouver le premier contenu de référence MREF1 et se retrouver là encore dans le statut déverrouillé avant d'effectuer un nouveau test avec un nouveau contenu de test, en écrivant par exemple le deuxième contenu de test MTST2.

Par ailleurs lorsque le circuit intégré est dans son statut déverrouillé, la donnée sensible DTS n'est pas stockée dans le plan-mémoire SMA mais dans la mémoire temporaire MMT (étape 5115).

Si dans l'étape S116, le test du plan-mémoire SMA s'est avéré non correct, alors il y a à nouveau une anomalie détectée (étape S117) et là encore le procédé s'arrête.

Si par contre le test s'avère positif (OK) alors, pour écrire le deuxième contenu de référence MREF2 dans le plan-mémoire SM1, on procède tout d'abord dans l'étape S118 à un effacement de masse du plan-mémoire SMA ce qui place donc toutes les cellules-mémoire de ce plan-mémoire dans l'état effacé (valeur logique « 1 » stockée).

Puis, on procède à la copie de la donnée sensible DTS dans la première zone mémoire ZM1 (étape 119).

Puis, dans l'étape S120, on programme toutes les cellules M3i,j de la troisième zone-mémoire c'est-à-dire que l'on écrit un 0 dans ces cellules.

Puisque les cellules-mémoire M2i,j qui ont été effacées préalablement lors de l'effacement de masse n'ont pas été programmées, elles conservent leur valeur logique 1.

On se retrouve donc dans l'étape S121, avec un plan-mémoire dont les cellules-mémoire M2i,j sont à l'état effacé (elles stockent des bits de valeur logique 1), et les cellules-mémoire M3i,j à l'état programmé (elles stockent des bits de valeur logique 0).

La logique de commande LGC détecte alors dans l'étape S122 le contenu du plan-mémoire SMA et par conséquent, dans l'étape S123, le deuxième contenu de référence MREF2 est détecté.

Ceci a pour conséquence, comme indiqué ci-avant, de verrouiller le dispositif de mémoire en entrée.

Cette opération est irréversible, et plus aucune écriture ne peut avoir lieu dans le plan mémoire du dispositif de mémoire (étape 124).

Le circuit intégré présente alors son statut verrouillé (étape S125).

La délivrance de la donne sensible DTS est alors possible et elle est effectuée par la logique de commande qui extrait les bits de cette donnée sensible et les délivre à l'extérieur du dispositif de mémoire (étape S126).

Le circuit intégré peut à ce stade, être livré à l'utilisateur final pour son utilisation.

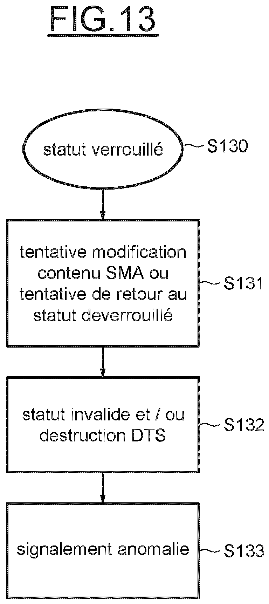

On se réfère maintenant plus particulièrement à la figure 13 pour décrire des conséquences sur la donnée sensible DTS, résultant d'un comportement frauduleux.

Plus précisément, lorsque le circuit intégré est dans son statut verrouillé (étape 130), toute tentative de modification du contenu du plan-mémoire SMA ou toute tentative de retour au statut déverrouillé (étape S131) conduit à la délivrance d'un statut invalide et/ou à la destruction au moins partielle de la donnée sensible DTS (étape 132).

Plus précisément, si un tiers mal intentionné effectue un effacement de masse du plan-mémoire SMA, pour tenter de retrouver le statut déverrouillé, il change de facto en la valeur 1, les bits de la donnée sensible qui avait la valeur 0.

La donnée DTS est donc corrompue (au moins partiellement détruite) ce qui rend le domaine fonctionnel DMF du circuit intégré non opérationnel (non fonctionnel).

Si le tiers mal intentionné souhaite effectuer, comme indiqué ci-avant, des effacements sélectifs de cellules-mémoire en tentant de masquer d'autres cellules-mémoire adjacentes qu'il ne veut pas effacer, ces cellules-mémoire adjacentes masquées ont toutes les chances d'être tout de même effacées par diffraction du rayonnement ultraviolet servant à l'effacement sélectif. Ainsi par exemple ceci va corrompre les cellules-mémoire contenant les bits de la donnée sensible, qui se situent immédiatement au voisinage des cellules M3i,j que le tiers mal intentionné souhaite effacer pour reprogrammer.

De même, il va être extrêmement difficile voire impossible pour un tiers mal intentionné d'effectuer une attaque du type FIB pour essayer de programmer sélectivement certaines cellules-mémoire effacées tout en ne programmant pas des cellules-mémoire adjacentes.

Et, si la logique de commande détecte un contenu mémorisé du plan-mémoire SMA qui est différent du premier contenu de référence ou du deuxième contenu de référence, le statut est alors déclaré invalide et il y a signalement d'une anomalie (étape S133).

En réponse à ce signal d'anomalie, aucune donnée n'est délivrée en sortie du dispositif de mémoire et le circuit intégré peut également effectuer d'autres actions de protection, comme par exemple un blocage complet du microcontrôleur.

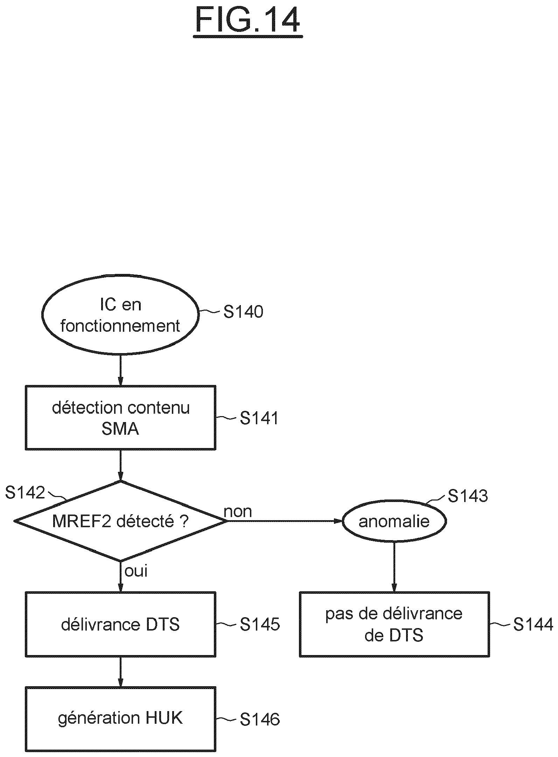

La figure 14 illustre schématiquement une utilisation du dispositif de mémoire chez l'utilisateur final lorsque le circuit intégré IC est en fonctionnement (étape S140).

Avant toute opération destinée à utiliser la donnée sensible DTS, par les moyens appropriés du circuit intégré, par exemple les moyens de cryptage/décryptage MCR, la logique de commande LGC procède à une détection S141 du contenu du plan-mémoire SMA.

Si le deuxième contenu de référence MREF2 est détecté dans l'étape S142, alors le statut verrouillé est confirmé et la délivrance de la sortie DTS dans l'étape S145 par la logique de commande LGC est possible et la clé de cryptage/décryptage HUK peut être générée dans l'étape S146.

Si par contre dans l'étape S142, le deuxième contenu de référence MREF n'est pas détecté, alors il y a détection d'une anomalie et à nouveau blocage du dispositif de mémoire et non délivrance de la données sensible DTS (étape 144).

## Revendications

1. Circuit intégré, comprenant un dispositif de mémoire (DM) comportant un plan mémoire (SMA) ayant des cellules mémoires non volatiles et étant non observable en lecture depuis l'extérieur du dispositif de mémoire, des moyens de commande (MCM), internes au dispositif de mémoire, configurés pour détecter le contenu mémorisé du plan mémoire, et lorsque le contenu mémorisé contient un contenu dit de verrouillage (MREF2), verrouiller tout accès au plan mémoire depuis l'extérieur du dispositif de mémoire, le circuit intégré étant alors dans un statut dit verrouillé, et autoriser une délivrance à l'extérieur du dispositif de mémoire d'au moins une donnée dite sensible (DTS) stockée dans le plan-mémoire.

2. Circuit intégré selon la revendication 1, dans lequel le dispositif de mémoire (DM) comporte une interface (IF1) configurée pour recevoir des données à écrire dans le plan mémoire, et des moyens de traitement (MT) configurés pour, lorsque le plan mémoire contient un contenu particulier (MREF1) correspondant à un statut dit déverrouillé du circuit intégré, mémoriser dans le plan mémoire via l'interface, ledit contenu de verrouillage (MREF2) correspondant au statut verrouillé du circuit intégré et ladite au moins une donnée dite sensible, les moyens de commande (MCM) étant configurés pour lorsque le contenu mémorisé contient le contenu de verrouillage, interdire tout accès au plan mémoire via ladite interface et autoriser une délivrance de ladite au moins une donnée sensible (DTS) à l'extérieur du dispositif de mémoire.

3. Circuit intégré selon la revendication 1 ou 2, comprenant au moins un domaine fonctionnel (DMF), ladite au moins une donnée dite sensible contribuant à assurer la fonctionnalité du domaine fonctionnel.

4. Circuit intégré selon la revendication 2 ou 3, dans lequel les cartographies respectives du contenu particulier (MREF1) et du contenu de verrouillage (MREF2), la localisation de ladite au moins une donnée sensible dans le plan mémoire ainsi que les caractéristiques structurelles du plan mémoire sont telles que lorsque le circuit intégré est dans son statut verrouillé, une tentative de modification du contenu mémorisé dans le plan mémoire, place le circuit dans un statut dit invalide interdisant la délivrance de ladite au moins une donnée sensible à l'extérieur du dispositif de mémoire et/ou détruise au moins une partie de ladite au moins une donnée sensible mémorisée.

5. Circuit intégré selon l'une des revendications précédentes prise en combinaison avec la revendication 2, dans lequel les moyens de commande (MCM) sont configurés pour détecter le contenu mémorisé dans le plan mémoire et signaler une anomalie si le contenu mémorisé est différent du contenu particulier ou du contenu de verrouillage.

6. Circuit intégré selon l'une des revendications précédentes prise en combinaison avec la revendication 2, dans lequel le contenu particulier comporte un premier contenu de référence (MREF1) étant au moins une partie du contenu du plan mémoire obtenu à l'issue de la fabrication du circuit intégré.

7. Circuit intégré selon la revendication 6, dans lequel le contenu particulier appartient au groupe formé par le premier contenu de référence (MREF1) et par au moins un premier contenu de test destiné à être utilisé pour tester le plan mémoire avant la mémorisation du contenu de verrouillage.

8. Circuit selon l'une des revendications précédentes, dans lequel les moyens de commande comportent des moyens de verrouillage (MVR) configurés pour, en présence d'un signal de commande, verrouiller l'accès de la mémoire en écriture, et un bloc de contrôle configuré pour détecter le contenu mémorisé dans le plan mémoire, et pour lorsque le contenu de verrouillage est détecté, délivrer le signal de commande aux moyens de verrouillage et autoriser la délivrance de ladite au moins une donnée sensible à l'extérieur du dispositif de mémoire.

9. Circuit selon les revendications 5 et 8, dans lequel le bloc de contrôle (BLC) est configuré pour signaler ladite anomalie si le contenu mémorisé est différent du contenu particulier ou du contenu de verrouillage.

10. Circuit selon l'une des revendications précédentes, dans lequel le plan mémoire (SMA) est effaçable par bloc de cellules-mémoires.

11. Circuit intégré selon l'une des revendications précédentes, dans lequel la taille surfacique de chaque cellule-mémoire (Mi,j) est inférieure à une taille limite.

12. Circuit intégré selon l'une des revendications précédentes, dans lequel chaque cellule-mémoire (Mi,j) est configurée pour posséder un premier état correspondant à une première valeur logique d'un bit stocké dans cette cellule-mémoire et un deuxième état correspondant à une deuxième valeur logique du bit stocké dans cette cellule-mémoire, dans lequel ladite au moins une donnée sensible comporte au moins un bit et le plan mémoire comporte une première zone (ZM1) contenant une ou plusieurs premières cellules-mémoires configurées pour stocker respectivement le ou les bits de ladite au moins une donnée sensible, une deuxième zone (ZM2) et une troisième zone (ZM3), et dans lequel dans le statut verrouillé, la première zone contient ladite au moins une donnée sensible, les cellules-mémoires de la deuxième zone sont dans leur premier état et les cellules-mémoires de la troisième zone sont dans leur deuxième état, les valeurs logiques des bits des cellules-mémoires de la deuxième zone et de la troisième zone formant le contenu de verrouillage.

13. Circuit intégré selon la revendication 12, dans lequel le premier état correspond à l'état effacé de la cellule-mémoire (Mi,j), le bit stocké dans cette cellule-mémoire à l'état effacé ayant la valeur logique 1, et le deuxième état correspond à l'état programmé de la cellule-mémoire (Mi,j), le bit stocké dans cette cellule-mémoire à l'état programmé ayant la valeur logique 0.

14. Circuit intégré selon la revendication 12 ou 13 prise en combinaison avec la revendication 6 ou 7, dans lequel dans le statut déverrouillé, ladite au moins une donnée sensible (DTS) n'est pas stockée dans la première zone (ZM1) et la troisième zone comporte un nombre, supérieur à un seuil, de cellules-mémoires de la troisième zone étant dans leur premier état, les valeurs logiques de ces cellules-mémoires dans leur premier état formant le premier contenu de référence.

15. Circuit intégré selon la revendication 14, dans lequel le seuil est égal à 90% du nombre de cellules-mémoires (M3i,j) de la troisième zone.

16. Circuit intégré selon l'une des revendications 12 à 15, dans lequel le nombre de premières cellules-mémoires (M1i,j) est inférieur au nombre de cellules-mémoires de la troisième zone et les premières cellules-mémoires sont dispersées au sein du plan mémoire.

17. Circuit intégré selon la revendication 16, dans lequel le nombre de premières cellules-mémoires (M1i,j) est inférieur à 15% du nombre de cellules-mémoires du plan mémoire.

18. Circuit intégré selon l'une des revendications 12 à 17, dans lequel le nombre de cellules-mémoire (M2i,j) de la deuxième zone est inférieur au nombre de cellules-mémoires de la troisième zone et les cellules-mémoire de la deuxième zone sont dispersées au sein du plan mémoire.

19. Circuit intégré selon la revendication 18, dans lequel le nombre de cellules-mémoire (M2i,j) de la deuxième zone est inférieur à 15% du nombre de cellules-mémoires du plan mémoire.

20. Circuit intégré selon l'une des revendications précédentes prise en combinaison avec la revendication 7, dans lequel ledit au moins un contenu de test comporte des « 0 » logiques et des « 1 » logiques formant ensemble un damier.

21. Circuit intégré selon l'une des revendications précédentes prise en combinaison avec les revendications 2 et 12, dans lequel, pour mémoriser le contenu de verrouillage et ladite au moins une donnée sensible dans le plan mémoire, les moyens de traitement (MT) sont configurés pour placer dans leur premier état toutes les cellules-mémoire du plan mémoire, puis pour stocker ladite au moins une donnée sensible dans la ou les premières cellules-mémoires, puis placer toutes les cellules-mémoire de la troisième zone dans leur deuxième état.

22. Circuit intégré selon la revendication 21, comportant en outre une mémoire temporaire (MMT) configurée pour stocker ladite au moins une donnée sensible lorsque le circuit intégré est dans son statut déverrouillé, et les moyens de traitement sont configurés pour copier ladite au moins une donnée sensible dans la ou les premières cellules-mémoire et pour effacer la mémoire temporaire.

23. Circuit intégré selon l'une des revendications précédentes, dans lequel les cellules-mémoire (Mi,j) sont des cellules-mémoire ayant chacune une grille flottante, une grille de commande et un transistor de sélection enterré dans un substrat.

24. Circuit intégré selon l'une des revendications précédentes, formant un microcontrôleur.

25. Procédé de protection d'un circuit intégré, comprenant
- a) équiper le circuit intégré (IC) d'un dispositif de mémoire (DM) comportant un plan mémoire (SMA) ayant des cellules mémoires non volatiles et étant non observable en lecture depuis l'extérieur du dispositif de mémoire,
- b) faire détecter par le dispositif de mémoire lui-même le contenu mémorisé du plan mémoire, et
lorsque le contenu mémorisé contient un contenu de verrouillage,
- c) faire verrouiller par le dispositif de mémoire lui-même, tout accès au plan mémoire depuis l'extérieur du dispositif de mémoire, le circuit intégré étant alors dans un statut verrouillé, et faire autoriser par le dispositif de mémoire lui-même une délivrance à l'extérieur du dispositif de mémoire d'au moins une donnée dite sensible (DTS) stockée dans le plan-mémoire.

26. Procédé selon la revendication 25, dans lequel le dispositif de mémoire comportant une interface, l'étape b) comprend en outre : lorsque le plan mémoire contient un contenu particulier (MREF1) correspondant à un statut dit déverrouillé du circuit intégré, mémoriser dans le plan mémoire via l'interface, le contenu de verrouillage (MREF2) et ladite au moins une donnée sensible, et l'étape c) comprend faire interdire par le dispositif de mémoire tout accès au plan mémoire via ladite interface et faire autoriser par le dispositif de mémoire lui-même la délivrance de ladite au moins une donnée sensible (DTS) à l'extérieur du dispositif de mémoire.

27. Procédé selon la revendication 25 ou 26, dans lequel l'étape a) est effectuée lors de la fabrication du circuit intégré, et les étapes b) et c) sont effectuées après la fabrication du circuit intégré (IC) et avant une livraison du circuit intégré à un utilisateur.

28. Procédé selon l'une des revendications 25 à 27, comprenant après livraison du circuit intégré à l'utilisateur, lors du fonctionnement du circuit intégré, avant toute opération effectuée par le circuit intégré nécessitant au moins une utilisation de ladite au moins une donnée sensible (DTS), une détection par le dispositif de mémoire, du contenu mémorisé du plan mémoire, et si le contenu mémorisé contient le contenu de verrouillage (MREF2), une délivrance par le dispositif de mémoire de ladite au moins une donnée sensible à l'extérieur du dispositif de mémoire.

29. Procédé selon l'une des revendications 25 à 28, dans lequel lorsque le circuit intégré est dans son statut verrouillé, une tentative de modification du contenu mémorisé dans le plan mémoire, place le circuit dans un statut dit invalide interdisant la délivrance de ladite au moins une donnée sensible (DTS) à l'extérieur du dispositif de mémoire et/ou détruit au moins une partie de ladite au moins une donnée sensible mémorisée (DTS).

30. Procédé selon l'une des revendications 25 à 29, dans lequel le circuit intégré comprend au moins un domaine fonctionnel (DMF), ladite au moins une donnée dite sensible contribuant à assurer la fonctionnalité du domaine fonctionnel.

31. Procédé selon l'une des revendications 25 à 30 prise en combinaison avec la revendication 26, dans lequel le dispositif de mémoire signale une anomalie si le contenu mémorisé est différent du contenu particulier (MREF1) ou du contenu de verrouillage (MREF2).

32. Procédé selon l'une des revendications 25 à 31 prise en combinaison avec la revendication 26, dans lequel le contenu particulier comporte un premier contenu de référence (MREF1) étant au moins une partie du contenu du plan mémoire obtenu à l'issu de la fabrication du circuit intégré.

33. Procédé selon la revendication 32, dans lequel le contenu particulier appartient au groupe formé par le premier contenu de référence (MREF1) et au moins un premier contenu de test, et l'étape b) comprend en outre un test de plan mémoire avec ledit au moins un premier contenu de test.

34. Procédé selon l'une des revendications 25 à 33 prise en combinaison avec la revendication 26, dans lequel dans le statut déverrouillé, on ne stocke ladite au moins une donnée sensible dans une mémoire temporaire distincte du plan mémoire, et la mémorisation du contenu de verrouillage comprend un effacement de toutes les cellules-mémoire (Mi,j) du plan mémoire, puis un stockage de ladite au moins une donnée sensible dans le plan mémoire et une écriture du contenu de verrouillage dans la plan mémoire et un effacement de la mémoire temporaire.
